# EUROPÄISCHE PATENTSCHRIFT

(11) **EP 3 411 275 B1**
(45) Veröffentlichungstag und Bekanntmachung des Hinweises auf die Patenterteilung: **08.04.2020**
(21) Anmeldenummer: 17702634.1
(22) Anmeldetag: 02.02.2017
(51) Int. Cl.: B60T 13/66, B60T 17/18, B60T 13/68, B60T 17/22

(54) **BREMSSYSTEM FÜR EIN NUTZFAHRZEUG**
BRAKE SYSTEM FOR A UTILITY VEHICLE
SYSTÈME DE FREINAGE POUR VÉHICULE UTILITAIRE

(30) Priorität: 04.02.2016 DE 102016001172
(43) Veröffentlichungstag der Anmeldung: 12.12.2018
(73) Patentinhaber: KNORR-BREMSE Systeme für Nutzfahrzeuge GmbH, 80809 München (DE)
(72) Erfinder: ZEMAN, Ferenc, 1114 Budapest (HU)
(86) Internationale Anmeldenummer: PCT/EP2017/052245
(87) Internationale Veröffentlichungsnummer: WO 2017/134160

(56) Entgegenhaltungen:
- EP-A1- 1 382 502
- EP-A1- 2 821 303
- EP-A1- 2 837 535
- EP-A2- 2 058 186
- DE-A1-102006 041 011
- DE-A1-102007 016 335
- DE-A1-102007 047 691
- DE-A1-102007 061 908
- DE-A1-102008 014 547

## Beschreibung

Die vorliegende Erfindung betrifft ein Bremssystem, insbesondere ein hydraulisches und/oder pneumatisches Bremssystem, für ein für ein Nutzfahrzeug, mit wenigstens einer Parkbremseinrichtung und mit wenigstens einem weiteren hydraulischen und/oder pneumatischen Modul.

Aus dem Stand der Technik sind bereits derartige gattungsgemäße, insbesondere elektronische, Bremssysteme bekannt, die mit einer redundanten Absicherung eines Bremskreises im Falle eines unerwünschten Druckverlusts versehen sind, z.B. aus der DE 10 2007 016 335 A1, der DE 10 2008 014 547 A1, der DE 100 04 086 A1, der DE 103 56 672 A1, der DE 195 04 394 C1, der DE 195 14 603 A1, der DE 10 2005 024 120 A1, der DE 10 2007 004 759 A1, der DE 10 2007 056 146 A1, der EP 0 110 119 A1, der EP 0 569 357 B1, der EP 2 240 352 B1, der EP 2 719 594 A1, der US 2003/075973 A1 und der US 2009/236904 A1.

Es ist daher die Aufgabe der vorliegenden Erfindung, ein Bremssystem der eingangs genannten Art in vorteilhafter Weise weiterzubilden, insbesondere dahingehend, dass alternative Lösungen für redundante Absicherungen für Bremssysteme, insbesondere Parkbremseinrichtungen für Nutzfahrzeuge bereitgestellt werden und dass nach Möglichkeit die Betriebssicherheit des Bremssystems noch weiter erhöht werden kann.

Diese Aufgabe wird erfindungsgemäß gelöst durch ein Bremssystem mit den Merkmalen des Anspruchs 1. Danach ist vorgesehen, dass ein Bremssystem für ein Nutzfahrzeug, insbesondere ein hydraulisches und/oder pneumatisches Bremssystem für ein Nutzfahrzeug, mit wenigstens einer Parkbremseinrichtung und mit wenigstens einem weiteren hydraulischen und/oder pneumatischen Modul versehen ist, wobei weiter ein Select-High-Ventil und ein Federspeicherbremszylinder vorgesehen sind, wobei die Parkbremseinrichtung mit einer ersten Verbindungsleitung an einem ersten Eingangsanschluss mit dem Select-High-Ventil verbunden ist, wobei das hydraulische und/oder pneumatische Modul mit einer zweiten Verbindungsleitung an einem zweiten Eingangsanschluss mit dem Select-High-Ventil verbindbar ist, wobei der Federspeicherbremszylinder mit einer dritten Verbindungsleitung an einem Ausgangsanschluss mit dem Select-High-Ventil verbunden ist und wobei in der zweiten Verbindungsleitung ein Steuerventil vorgesehen ist, mittels dessen das hydraulische und/oder pneumatische Modul in einem ersten Schaltzustand des Steuerventils nicht mit dem Select-High-Ventil verbunden ist und in einem wenigstens zweiten Schaltzustand des Steuerventils mit dem Select-High-Ventil verbunden ist.

Ferner ist das Bremssystem derart beschaffen und eingerichtet, dass wenigstens ein Federspeicherbremszylinder über zwei redundante, jeweils mit unterschiedlichen Druckmittelquellen verbundenen Verbindungsleitungen und über ein Select-High-Ventil belüftbar ist. Die Schaltungsanordnung ist derart konzipiert, dass auch der Abschnitt der zweiten Verbindungsleitung zwischen Steuerventil und Select-High-Ventil während dem Fahrbetrieb des Nutzfahrzeugs belüftet ist.

Kommt es nun während dem Fahrbetrieb des Nutzfahrzeugs zu einem unerwünschten Druckverlust in der als Hauptversorgungsleitung dienenden ersten Verbindungsleitung, kann der Federspeicherbremszylinder weiterhin mittels dem hydraulischen und/oder pneumatischen Modul, der zweiten Verbindungsleitung und dem Steuerventil belüftet werden. Da dieser Abschnitt der zweiten Verbindungsleitung bereits zuvor belüftet worden ist, muss das hydraulische und/oder pneumatische Modul den erforderlichen Betriebsdruck nicht mehr aufbauen. Folglich kann der Federspeicherbremszylinder schneller weiterbelüftet werden und somit sichergestellt wird, dass die Bremseinrichtung in der Stellung für den Fahrbetrieb verbleibt.

Im Übrigen kann es vorgesehen sein, dass das Bremssystem ein pneumatisches Bremssystem ist. Da pneumatische Bremssysteme bei Nutzfahrzeugen ab einem gewissen zulässigen Gesamtgewicht standardmäßig eingesetzt werden, ist der Einsatz pneumatischer Bremssysteme im Hinblick auf einen wirtschaftlichen Einsatz bei Nutzfahrzeugen besonders vorteilhaft.

Ferner ist vorstellbar, dass die Parkbremseinrichtung eine elektronische Parkbremseinrichtung ist. Die Parkbremseinrichtung kann durch den Einsatz elektronischer und/oder elektrischer Komponenten weniger komplex aufgebaut sein, da pneumatische Bauteile wie z.B. Steuerleitungen entfallen, was sich zusätzlich positiv auf das Gewicht und die Gesamtkosten des Bremssystems auswirkt. Im Übrigen kann durch eine verkürzte Ansprechzeit der elektronischen und/oder elektrischen Komponenten der Zeitbedarf zum Steuern des Bremssystems verkürzt werden.

Darüber hinaus ist denkbar, dass das Steuerventil ein 3/2-Wege-Ventil, insbesondere ein 3/2-Wege-Magnetventil, ist. Im Zuge der ständigen Weiterentwicklungen hinsichtlich verkürzter Ansprechzeiten von Magnetventilen, ist neben dem Entfall von pneumatischen Steuerleitungen sowie weiteren pneumatischen Komponenten ebenso eine kürzere Ansprechzeit verglichen zu pneumatisch gesteuerten 3/2-Wege-Ventilen diesbezüglich vorteilhaft hervorzuheben. Diese im Vergleich zu konventionellen Bremssystemen gewonnene Zeitersparnis ist zudem mit einer erheblichen Zunahme der Betriebssicherheit sowohl Bremssystems als auch des Nutzfahrzeugs verbunden.

Es kann außerdem denkbar sein, dass das Steuerventil einen Entlüftungsausgang aufweist, über den die zweite Verbindungsleitung im ersten Schaltzustand des Steuerventils wenigstens teilweise entlüftbar ist. Die Entlüftung des Federspeicherbremszylinders ist insbesondere dann erforderlich, wenn sich das Nutzfahrzeug in seinem zu parkenden Zustand befindet. Aus Effizienzgründen ist es dann vorteilhaft, nicht die gesamte zweite Verbindungsleitung zu entlüften.

Deshalb ist in diesem Zusammenhang insbesondere vorstellbar, dass wenigstens ein Abschnitt der zweiten Verbindungsleitung, der sich zwischen dem Steuerventil und dem Select-High-Ventil befindet, über den Entlüftungsausgang des Steuerventils in dessen ersten Schaltzustand entlüftbar ist. Durch die Entlüftung lediglich des Abschnitts der zweiten Verbindungsleitung, der sich zwischen dem Steuerventil und dem Select-High-Ventil befindet, kann darauf verzichtet werden, die gesamte zweite Verbindungsleitung zu entlüften, was eine schnellere Entlüftung ermöglicht. Zusätzlich wird bei einer erneuten Belüftung des Federspeicherzylinders das zu belüftende Volumen in der zweiten Verbindungsleitung verringert, wodurch sich die Effizienz des Bremssystems steigern lässt. Im Übrigen kann die Entlüftung des Federspeicherzylinders direkt vom Steuerventil vorgenommen werden und muss nicht über andere pneumatische Bauteile erfolgen, so dass auf diese verzichtet werden kann, woraus insbesondere Kosten-, Montage- und Gewichtsvorteile resultieren.

Außerdem ist es denkbar, dass eine Bypassleitung vorgesehen ist, die mit ihrem ersten Ende mit der ersten Verbindungsleitung verbunden ist und an ihrem zweiten Ende mit einem weiteren Anschluss des Steuerventils verbunden ist. Diese Schaltungsanordnung ermöglicht das kontinuierliche Belüften des Abschnitts der zweiten Verbindungsleitung zwischen Steuerventil in Form eines 3/2-Wege-Mangentventils und dem Select-High-Ventil über die erste Verbindungsleitung, von der die Bypassleitung abgezweigt ist, was besonders bei einem unerwünschten Druckverlust in der ersten Verbindungsleitung von Vorteil ist.

Diesbezüglich kann insbesondere vorgesehen sein, dass im ersten Schaltzustand des Steuerventils über die Bypassleitung der Druck aus der ersten Verbindungsleitung auch in dem Abschnitt der zweiten Verbindungsleitung anliegt, der sich zwischen dem Steuerventil und dem Select-High-Ventil befindet. Entsteht in der ersten Verbindungsleitung ein unerwünschter Druckverlust, erfasst das Bremssystem diesen Druckverlust (z.B. über einen Drucksensor) und betätigt daraufhin das 3/2-Wege-Magnetventil. Das Steuerventil schaltet von dem ersten in den zweiten Schaltzustand um. Der vorstehend erläuterte zweite Abschnitt der zweiten Verbindungsleitung wird im zweiten Schaltzustand des Steuerventils vom hydraulischen und/oder pneumatischen Modul mit Druck beaufschlagt. Da dieser Abschnitt der zweiten Verbindungsleitung bereits zuvor kontinuierlich über die Bypassleitung belüftet wurde, liegt dort sofort nach dem Umschalten des Steuerventils der Betriebsdruck an. Folglich muss das hydraulische und/oder pneumatische Modul in diesem Abschnitt der zweiten Verbindungsleitung keinen Druckaufbau mehr durchführen, wodurch eine nochmals verkürzte Belüftung des Federspeicherzylinders realisierbar ist und demnach die Sicherheit des Bremssystems ferner erhöht werden kann.

Insbesondere kann vorgesehen sein, dass die Parkbremseinrichtung ferner wenigstens ein Relaisventil aufweist, das in der ersten Verbindungsleitung vorgesehen ist. Das Vorsehen des Relaisventils in der ersten Verbindungsleitung ermöglicht eine präzise Steuerung des Be- und Entlüftungsvorgangs des Federspeicherbremszylinders und ist deshalb für eine präzise Steuerung des Federspeicherbremszylinders unumgäglich.

Ferner ist es vorstellbar, dass die Bypassleitung stromabwärts des Relaisventils von der ersten Verbindungsleitung abgezweigt ist. Das Vorsehen der Bypassleitung stromabwärts des Relaisventils macht eine Entlüftung des zwischen Select-High-Ventil und Steuerventil vorgesehenen Abschnitts der zweiten Verbindungsleitung an dem Steuerventil überflüssig. Vielmehr kann dieser Abschnitt der zweiten Verbindungsleitung gemeinsam mit der ersten Verbindungsleitung über das Relaisventil entlüftet werden, wenn sich das Nutzfahrzeug in einem Parkzustand befindet. Diese gemeinsame Entlüftung über das Relaisventil ist nur dann möglich, wenn sich die Bypassleitung stromabwärts des Relaisventils abzweigt. Dadurch wird eine strukturell einfache und kostengünstige Möglichkeit vorgesehen, die erste und zweite Verbindungsleitungen bzw. wenigstens Abschnitte davon zu entlüften. Im Übrigen wird der Aufbau des Relaisventils nicht zusätzlich verkompliziert, da die Bypassleitung nicht über einen weiteren Anschluss des Relaisventils be- und entlüftet wird, sondern über ein sehr einfaches Verbindungselement (z.B. T-Stück) von der ersten Verbindungsleitung abgezweigt ist.

Weiterhin kann es vorgesehen sein, dass ein Fahrzeug, insbesondere ein Nutzfahrzeug, mit wenigstens einem derartigen Bremssystem versehen ist. Da dieses Bremssystem verglichen zu herkömmlichen Bremssystemen die Betriebssicherheit weiter erhöht, ist der Einsatz eines derartigen Bremssystems auch insbesondere in einem Nutzfahrzeug besonders von Vorteil.

Weitere Einzelheiten und Vorteile der Erfindung sollen nun anhand von drei in den Figuren dargestellten Ausführungsbeispielen näher erläutert werden.

Es zeigen:
- Fig. 1:: eine schematische Schaltungsanordnung eines ersten Ausführungsbeispiels eines erfindungsgemäßen, mittels eines Handsteuerventils gesteuerten Bremssystems;
- Fig.2:: eine schematische Schaltungsanordnung eines zweiten Ausführungsbeispiels eines erfindungsgemäßen, mittels eines 3/2-Wege-Magnetventils gesteuerten Bremssystems; und
- Fig. 3:: eine schematische Schaltungsanordnung eines dritten Ausführungsbeispiels eines erfindungsgemäßen, mittels eines weiteren 3/2-Wege-Magnetventils gesteuerten Bremssystems.

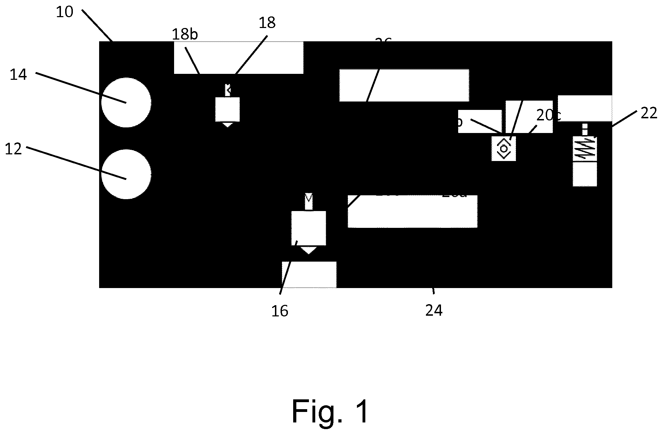

**Fig. 1** zeigt eine schematische Schaltungsanordnung eines ersten Ausführungsbeispiels eines erfindungsgemäßen Bremssystems 10 für ein Nutzfahrzeug.

Das Bremssystem 10 für ein Nutzfahrzeug (nicht in Fig. 1 dargestellt) ist als hydraulisches oder pneumatisches Bremssystem 10 ausgebildet.

Das Bremssystem 10 für ein Nutzfahrzeug ist insbesondere als pneumatisches Bremssystem 10 ausgebildet.

Das pneumatische Bremssystem 10 umfasst eine Parkbremseinrichtung 12 und ein weiteres pneumatisches oder hydraulisches Modul 14.

Das pneumatische oder hydraulische Modul 14 ist insbesondere als pneumatisches Modul 14 ausgebildet.

Ferner weist das pneumatische Bremssystem 10 ein Relaisventil 16, ein Steuerventil 18, ein Select-High-Ventil 20 und ein Federspeicherbremszylinder 22 auf.

Das Relaisventil 16 weist einen Eingangsanschluss 16a sowie einen Ausgangsanschluss 16c auf.

Ferner weist das Relaisventil 16 einen Steuereingangsanschluss 16b auf.

Das Steuerventil 18 ist gemäß erstem Ausführungsbeispiel als Handsteuerventil 18 ausgebildet.

Das Handsteuerventil 18 weist einen ersten und einen zweiten Eingangsanschluss 18a, 18b auf.

Weiter weist das Handsteuerventil 18 einen ersten und einen zweiten Ausgangsanschluss 18c, 18d auf.

Das Select-High-Ventil 20 ist zudem mit einem ersten Eingangsanschluss 20a und einem zweiten Eingangsanschluss 20b sowie einem Ausgangsanschluss 20c versehen.

Ferner ist die Parkbremseinrichtung 12 mit einer ersten Verbindungsleitung 24 an dem ersten Eingangsanschluss 20a mit dem Select-High-Ventil 20 verbunden.

In der ersten Verbindungsleitung 24 ist im Übrigen das Relaisventil 16 angeordnet.

Somit ist die Parkbremseinrichtung 12 mit einem ersten Abschnitt der ersten Verbindungsleitung 24 an dem Eingangsanschluss 16a mit dem Relaisventil 16 verbunden.

Weiter ist das Relaisventil 16 mit dessen Ausgangsanschluss 16c sowie mit einem zweiten Abschnitt der ersten Verbindungsleitung 24 an dem ersten Eingangsanschluss 20a mit dem Select-High-Ventil 20 verbunden.

Der zweite Abschnitt der ersten Verbindungsleitung 24 ist also zwischen Relaisventil 16 und Select-High-Ventil 20 angeordnet.

Das pneumatische Modul 14 wiederum ist mit einer zweiten Verbindungsleitung 26 an dem zweiten Eingangsanschluss 20b mit dem Select-High-Ventil 20 verbindbar.

In der zweiten Verbindungsleitung 26 ist außerdem das Handsteuerventil 18 vorgesehen.

Im Übrigen ist das pneumatische Modul 14 mit einem ersten Abschnitt der zweiten Verbindungsleitung 26 an dem zweiten Eingangsanschluss 18b mit dem Handsteuerventil 18 verbunden.

Ferner ist das Handsteuerventil 18 mit dessen ersten Ausgangsanschluss 18c sowie mit einem zweiten Abschnitt der zweiten Verbindungsleitung 26 an dem zweiten Eingangsanschluss 20b mit dem Select-High-Ventil 20 verbunden.

Der zweite Abschnitt der zweiten Verbindungsleitung 26 ist also zwischen Handsteuerventil 18 und Select-High-Ventil 20 angeordnet.

Das Handsteuerventil 18 ist zudem mit dessen zweiten Ausgangsanschluss 18d sowie mit einer Steuerleitung 28 an dem Steuereingangsanschluss 16b mit dem Relaisventil 16 verbunden.

Der Federspeicherbremszylinder 22 ist weiter mit einer dritten Verbindungsleitung 30 an dem Ausgangsanschluss 20c mit dem Select-High-Ventil 20 verbunden.

Außerdem ist von dem ersten Abschnitt der ersten Verbindungsleitung 24 stromabwärts der Parkbremseinrichtung 12 eine Bypassleitung 32 abgezweigt.

Die Parkbremseinrichtung 12 ist also mittels des ersten Abschnitts der ersten Verbindungsleitung 24 und mittels der Bypassleitung 32 an dem ersten Eingangsanschluss 18a mit dem Handsteuerventil 18 verbunden.

Die Funktion des ersten Ausführungsbeispiels des Bremssystems 10 mit einem Steuerventil 18 in Form eines Handsteuerventils 18 lässt sich folgendermaßen beschreiben:
Sobald an der Parkbremseinrichtung 12 der erforderliche Betriebsdruck anliegt, strömt Druckluft zunächst durch den ersten Abschnitt der ersten Verbindungsleitung 24 zum Eingangsanschluss 16a des Relaisventils 16 sowie durch die Bypassleitung 32 zum ersten Eingangsanschluss 18a des Handsteuerventils 18.

Sobald weiter an dem pneumatischen Modul 14 der jeweilige Betriebsdruck anliegt, welcher niedriger ist als der Betriebsdruck der Parkbremseinrichtung 12, strömt Druckluft zunächst durch den ersten Abschnitt der zweiten Verbindungsleitung 26 zum zweiten Eingangsanschluss 18b des Handsteuerventils 18.

Befindet sich das Handsteuerventil 18 in einem ersten Schaltzustand, ist das pneumatische Modul 14 nicht mit dem Select-High-Ventil 20 verbunden.

Zudem ist im ersten Schaltzustand des Handsteuerventils 18 ebenfalls die Bypassleitung 32 von der Steuerleitung 28 des Relaisventils 16 getrennt.

Im Übrigen ist im ersten Schaltzustand des Handsteuerventils 18 der zweite Abschnitt der zweiten Verbindungsleitung 26 sowie die Steuerleitung 28 durch das Handsteuerventil 18 entlüftet.

Durch die Entlüftung der Steuerleitung 28 ist zudem das Relaisventil 16 und infolgedessen auch der zweite Abschnitt der ersten Verbindungsleitung 24, die dritte Verbindungsleitung 30 sowie der Federspeicherzylinder 22 entlüftet.

Der erste Schaltzustand des Handsteuerventils 18 entspricht also einem Parkzustand des Nutzfahrzeugs.

Bevor nun das Nutzfahrzeug den Fahrbetrieb aufnimmt, wird das Handsteuerventil 18 durch den Fahrzeugführer betätigt und in den zweiten Schaltzustand überführt.

Im zweiten Schaltzustand des Handsteuerventils 18 ist das pneumatische Modul 14 mit dem Select-High-Ventil 20 verbunden.

Ferner werden nun die Bypassleitung 32 sowie die Steuerleitung 28 über das Handsteuerventil 18 verbunden, so dass Druckluft in den Steueranschluss 16b einströmt und sich daraufhin das Relaisventil 16 öffnet.

Druckluft kann nun vom ersten Abschnitt der ersten Verbindungsleitung 24 über das Relaisventil 16 in den zweiten Abschnitt der ersten Verbindungsleitung 24 einströmen, wodurch die Parkbremseinrichtung 12 nun mit dem Select-High-Ventil 20 verbunden ist.

Im zweiten Schaltzustand des Handsteuerventils 18 ist sowohl das pneumatische Modul 14 als auch die Parkbremseinrichtung 12 mit dem Select-High-Ventil 20 verbunden.

Da der Betriebsdruck der Parkbremseinrichtung 12 höher als derjenige des pneumatischen Moduls 14 ist, wird aufgrund der Funktionalität des Select-High-Ventils 22 lediglich die Parkbremseinrichtung 12 mit der dritten Verbindungsleitung 30 sowie mit dem Federspeicherzylinder 22 verbunden, so dass dieser nun belüftet werden kann.

Infolge der Belüftung ist der Federspeicherbremszylinder 22 bzw. die Parkbremseinrichtung 12 gelöst und der Fahrbetrieb des Nutzfahrzeugs kann aufgenommen werden.

Kommt es nun infolge eines Lecks oder eines Leitungsbruchs zu einem unerwünschten Druckverlust innerhalb der ersten Verbindungsleitung 24, fällt der Betriebsdruck am ersten Eingangsanschluss 20a des Select-High-Ventils 20 innerhalb kürzester Zeit auf Atmosphärendruck ab.

Da jedoch der zweite Eingangsanschluss 20b bereits mit dem Betriebsdruck des pneumatischen Moduls 14 beaufschlagt ist, schaltet das Select-High-Ventil 20 in dem Moment um, in dem der Wert des Betriebsdrucks der Parkbremseinrichtung 12 unter den Wert des Betriebsdrucks des pneumatischen Moduls 14 fällt.

Der Federspeicherbremszylinder 22 wird daher infolge eines unerwünschten Druckverlusts in der ersten Verbindungsleitung 24 sicher durch das pneumatische Modul 14 weiter belüftet, so dass eine Beeinträchtigung der Fahrzeugsicherheit durch einen unerwünscht betätigten Federspeicherbremszylinder 22 sicher vermeidbar ist.

Das erste Ausführungsbeispiel des erfindungsgemäßen Bremssystems 10 ist lediglich beispielhaft anhand eines Federspeicherbremszylinders 22 beschrieben worden.

Selbstverständlich kann das Bremssystem 10 im Sinne der Erfindung auch mehrere Federspeicherbremszylinder 22 sowie mehrere zu deren Funktion relevante pneumatische Bauteile (z.B. Relaisventil 16 oder Select-High-Ventil 20) aufweisen.

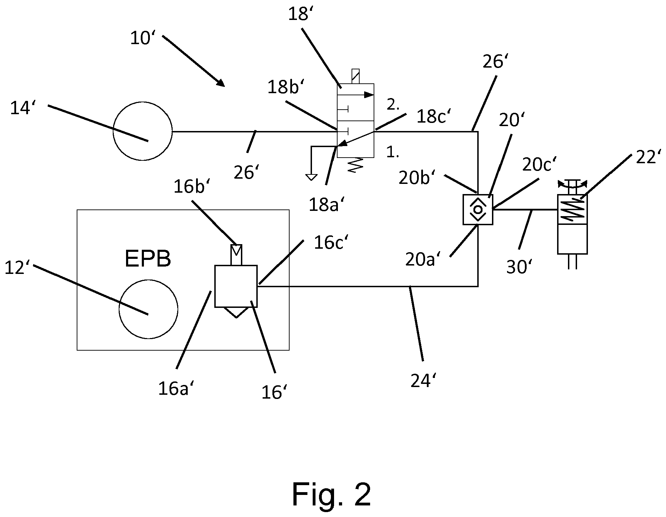

**Fig. 2** zeigt eine schematische Schaltungsanordnung eines zweiten Ausführungsbeispiels eines erfindungsgemäßen Bremssystems 10'.

Das pneumatische Bremssystem 10' umfasst eine Parkbremseinrichtung 12' und ein weiteres pneumatisches Modul 14'.

Die Parkbremseinrichtung 12' ist als elektronische Parkbremseinrichtung 12' ausgebildet.

Ferner weist das pneumatische Bremssystem 10' ein Relaisventil 16', ein Steuerventil 18', ein Select-High-Ventil 20' und ein Federspeicherbremszylinder 22' auf.

Das Relaisventil 16' weist einen Eingangsanschluss 16a' sowie einen Ausgangsanschluss 16c' auf.

Ferner weist das Relaisventil 16' einen Steuereingangsanschluss 16b' auf.

Das Steuerventil 18' ist gemäß zweitem Ausführungsbeispiel als 3/2-Wege-Magnetventil 18' ausgebildet.

Das 3/2-Wege-Magnetventil 18' weist einen Entlüftungsausgang 18a' auf.

Das 3/2-Wege-Magnetventil 18' weist weiter einen Eingangsanschluss 18b' und einen Ausgangsanschluss 18c' auf.

Das Select-High-Ventil 20' ist zudem mit einem ersten Eingangsanschluss 20a' und einem zweiten Eingangsanschluss 20b' sowie einem Ausgangsanschluss 20c' versehen.

Ferner ist die elektronische Parkbremseinrichtung 12' mit einer ersten Verbindungsleitung 24' an dem ersten Eingangsanschluss 20a' mit dem Select-High-Ventil 20' verbunden.

In der ersten Verbindungsleitung 24' ist im Übrigen das Relaisventil 16' angeordnet.

Folglich ist die elektronische Parkbremseinrichtung 12' mit einem ersten Abschnitt der ersten Verbindungsleitung 24' (nicht in Fig. 2 gezeigt) an dem Eingangsanschluss 16a' mit dem Relaisventil 16' verbunden.

Weiter ist das Relaisventil 16' mit dessen Ausgangsanschluss 16c' sowie mit einem zweiten Abschnitt der ersten Verbindungsleitung 24' an dem ersten Eingangsanschluss 20a' mit dem Select-High-Ventil 20' verbunden.

Der zweite Abschnitt der ersten Verbindungsleitung 24' ist also zwischen Relaisventil 16' und Select-High-Ventil 20' angeordnet.

Das pneumatische Modul 14' wiederum ist mit einer zweiten Verbindungsleitung 26' an dem zweiten Eingangsanschluss 20b' mit dem Select-High-Ventil 20' verbindbar.

In der zweiten Verbindungsleitung 26' ist außerdem das 3/2-Wege-Magnetventil 18' vorgesehen.

Im Übrigen ist das pneumatische Modul 14' mit einem ersten Abschnitt der zweiten Verbindungsleitung 26' an dem Eingangsanschluss 18b' mit dem 3/2-Wege-Magnetventil 18' verbunden.

Ferner ist das 3/2-Wege-Magnetventil 18' mit dessen Ausgangsanschluss 18c' sowie mit einem zweiten Abschnitt der zweiten Verbindungsleitung 26' an dem zweiten Eingangsanschluss 20b' mit dem Select-High-Ventil 20' verbunden.

Der zweite Abschnitt der zweiten Verbindungsleitung 26' ist also zwischen 3/2-Wege-Magnetventil 18' und Select-High-Ventil 20' angeordnet.

Der Federspeicherbremszylinder 22' ist weiter mit einer dritten Verbindungsleitung 30' an dem Ausgangsanschluss 20c' mit dem Select-High-Ventil 20' verbunden.

Das 3/2-Wege-Magnetventil 18' ist ferner mittels einer elektronischen Steuerungseinheit (nicht in Fig. 2 gezeigt) wirkverbunden.

Innerhalb der ersten Verbindungsleitung 24' kann zudem ein Drucksensor (ebenfalls nicht in Fig. 2 gezeigt) vorgesehen sein, der auch mit der elektronischen Steuerungseinheit wirkverbunden ist.

Die Funktion des zweiten Ausführungsbeispiels des Bremssystems 10' mit einem Steuerventil 18' in Form eines 3/2-Wege-Magnetventils 18' lässt sich folgendermaßen beschreiben:
Sobald an der elektronischen Parkbremseinrichtung 12' der Betriebsdruck anliegt, strömt Druckluft zunächst durch den ersten Abschnitt der ersten Verbindungsleitung 24' zum Eingangsanschluss 16a' des Relaisventils 16'.

Sobald weiter an dem pneumatischen Modul 14' der Betriebsdruck anliegt, welcher niedriger ist als der Betriebsdruck der Parkbremseinrichtung, strömt Druckluft zunächst durch den ersten Abschnitt der zweiten Verbindungsleitung 26' zum Eingangsanschluss 18b' des 3/2-Wege-Magnetventils 18'.

Befindet sich das 3/2-Wege-Magnetventil 18' in einem ersten Schaltzustand, ist das pneumatische Modul 14' nicht mit dem Select-High-Ventil 20' verbunden.

Im Übrigen ist im ersten Schaltzustand des 3/2-Wege-Magnetventils 18' der zweite Abschnitt der zweiten Verbindungsleitung 26' durch den Entlüftungsausgang 18a' des 3/2-Wege-Magnetventils 18' entlüftet.

Folglich ist die zweite Verbindungsleitung 26' im ersten Schaltzustand des 3/2-Wege-Magnetventils 18' mittels des Entlüftungsausgangs 18a' wenigstens teilweise entlüftbar.

Da das Relaisventil 16' ebenfalls nicht betätigt bzw. geöffnet ist, kann der Federspeicherbremszylinder 22 nicht belüftet werden, so dass sich das Nutzfahrzeug im Parkzustand befindet.

Bevor nun das Nutzfahrzeug seinen Fahrbetrieb aufnehmen kann, wird das Relaisventil 16' durch den Steuereingangsanschluss 16b' betätigt und in einen geöffneten Schaltzustand überführt.

Druckluft kann nun vom ersten Abschnitt der ersten Verbindungsleitung 24' (nicht in Fig. 2 gezeigt) über das Relaisventil 16' in den zweiten Abschnitt der ersten Verbindungsleitung 24' einströmen, wodurch die Parkbremseinrichtung 12' nun mit dem Select-High-Ventil 20' verbunden ist.

Da am zweiten Eingangsanschluss 20b' des Select-High-Ventils 20' infolge des ersten Schaltzustands des 3/2-Wege-Magnetventils 18' im Wesentlichen der Atmosphärendruck anliegt und somit der Druck am ersten Eingangsanschluss 20a' (Betriebsdruck der elektronischen Parkbremseinrichtung 12') höher ist, wird mittels des Select-High-Ventils 20' lediglich die elektronische Parkbremseinrichtung 12' mit der dritten Verbindungsleitung 30' sowie mit dem Federspeicherzylinder 22' verbunden, so dass dieser nun belüftet werden kann.

Infolge der Belüftung ist der Federspeicherbremszylinder 22' bzw. die elektronische Parkbremseinrichtung 12' gelöst und der Fahrbetrieb des Nutzfahrzeugs kann aufgenommen werden.

Kommt es nun infolge eines Lecks oder eines Leitungsbruchs zu einem unerwünschten Druckverlust innerhalb der ersten Verbindungsleitung 24', fällt der durch die elektronische Parkbremseinrichtung 12' bereitgestellte Betriebsdruck am ersten Eingangsanschluss 20a' des Select-High-Ventils 20' innerhalb kürzester Zeit auf Atmosphärendruck ab.

Der so entstehende Druckabfall wird von dem Drucksensor in der ersten Verbindungsleitung 24' umgehend erfasst, wodurch ein entsprechendes Steuersignal an die elektronische Steuerungseinheit übermittelt wird.

In Antwort auf das übermittelte Steuersignal des Drucksensors wird das 3/2-Wege-Magnetventil 18' elektrisch betätigt und von seinem ersten in seinen zweiten Schaltzustand überführt.

Im zweiten Schaltzustand des 3/2-Wege-Magnetventils 18' ist das pneumatische Modul 14' nun mit dem Select-High-Ventil 20' verbunden.

Da der zweite Eingangsanschluss 20b' nun mit dem Betriebsdruck des pneumatischen Moduls 14' beaufschlagt ist, schaltet das Select-High-Ventil 20' in dem Moment um, in dem der Wert des Betriebsdrucks in der ersten Verbindungsleitung 24' unter den Wert des Betriebsdrucks des pneumatischen Moduls 14 fällt.

Der Federspeicherbremszylinder 22 kann nun durch das pneumatische Modul 14 weiter belüftet werden.

Das zweite Ausführungsbeispiel des erfindungsgemäßen Bremssystems 10' ist lediglich beispielhaft anhand eines Federspeicherbremszylinders 22' beschrieben worden.

Selbstverständlich kann das Bremssystem 10' im Sinne der Erfindung auch mehrere Federspeicherbremszylinder 22' sowie mehrere zu deren Funktion relevante pneumatische Bauteile (z.B. Relaisventil 16' oder Select-High-Ventil 20') aufweisen.

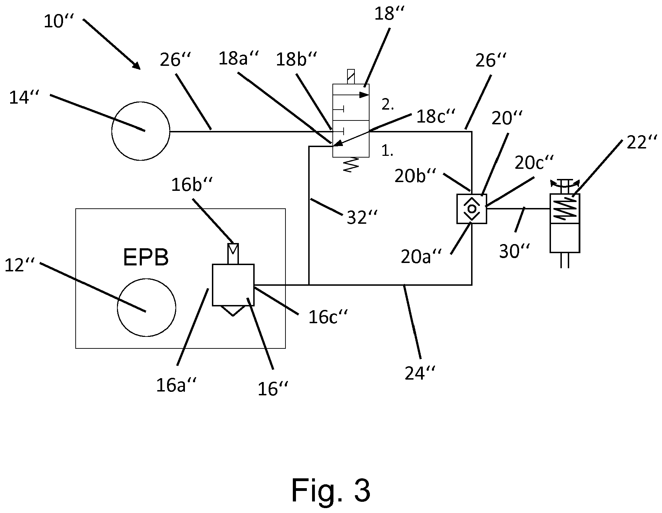

**Fig. 3** zeigt eine schematische Schaltungsanordnung eines dritten Ausführungsbeispiels eines erfindungsgemäßen Bremssystems 10".

Das pneumatische Bremssystem 10" umfasst eine elektronische Parkbremseinrichtung 12" und ein weiteres pneumatisches Modul 14".

Ferner weist das pneumatische Bremssystem 10" ein Relaisventil 16", ein Steuerventil 18", ein Select-High-Ventil 20" und einen Federspeicherbremszylinder 22" auf.

Das Relaisventil 16" weist einen Eingangsanschluss 16a" sowie einen Ausgangsanschluss 16c" auf.

Ferner weist das Relaisventil 16" einen Steuereingangsanschluss 16b" auf.

Das Steuerventil 18" ist gemäß drittem Ausführungsbeispiel als 3/2-Wege-Magnetventil 18" ausgebildet.

Das 3/2-Wege-Magnetventil 18" weist einen ersten Eingangsanschluss 18a", einen zweiten Eingangsanschluss 18b" und einen Ausgangsanschluss 18c" auf.

Das Select-High-Ventil 20" ist zudem mit einem ersten Eingangsanschluss 20a" und einem zweiten Eingangsanschluss 20b" sowie einem Ausgangsanschluss 20c" versehen.

Ferner ist die elektronische Parkbremseinrichtung 12" mit einer ersten Verbindungsleitung 24" an dem ersten Eingangsanschluss 20a" mit dem Select-High-Ventil 20" verbunden.

In der ersten Verbindungsleitung 24" ist im Übrigen das Relaisventil 16" angeordnet.

Folglich ist die elektronische Parkbremseinrichtung 12" mit einem ersten Abschnitt der ersten Verbindungsleitung 24" (nicht in Fig. 2 gezeigt) an dem Eingangsanschluss 16a" mit dem Relaisventil 16" verbunden.

Weiter ist das Relaisventil 16" mit dessen Ausgangsanschluss 16c" sowie mit einem zweiten Abschnitt der ersten Verbindungsleitung 24" an dem ersten Eingangsanschluss 20a" mit dem Select-High-Ventil 20" verbunden.

Der zweite Abschnitt der ersten Verbindungsleitung 24" ist also zwischen Relaisventil 16" und Select-High-Ventil 20" angeordnet.

Das pneumatische Modul 14" wiederum ist mit einer zweiten Verbindungsleitung 26" an dem zweiten Eingangsanschluss 20b" mit dem Select-High-Ventil 20" verbindbar.

In der zweiten Verbindungsleitung 26" ist zudem das 3/2-Wege-Magnetventil 18" vorgesehen.

Im Übrigen ist das pneumatische Modul 14" mit einem ersten Abschnitt der zweiten Verbindungsleitung 26" an dem zweiten Eingangsanschluss 18b" mit dem 3/2-Wege-Magnetventil 18" verbunden.

Ferner ist das 3/2-Wege-Magnetventil 18" mit dessen Ausgangsanschluss 18c" sowie mit einem zweiten Abschnitt der zweiten Verbindungsleitung 26" an dem zweiten Eingangsanschluss 20b" mit dem Select-High-Ventil 20" verbunden.

Der zweite Abschnitt der zweiten Verbindungsleitung 26' ist also zwischen 3/2-Wege-Magnetventil 18' und Select-High-Ventil 20' angeordnet.

Der Federspeicherbremszylinder 22" ist weiter mit einer dritten Verbindungsleitung 30" an dem Ausgangsanschluss 20c" mit dem Select-High-Ventil 20" verbunden.

Zusätzlich ist eine Bypassleitung 32" vorgesehen, die stromabwärts des Relaisventils 16" von der ersten Verbindungsleitung 24" abgezweigt ist.

Die Bypassleitung 32" ist mit ihrem ersten Ende mit der ersten Verbindungsleitung 24" verbunden.

Zudem ist die Bypassleitung 32" mit ihrem zweiten Ende an dem ersten Eingangsanschluss 18a" mit dem 3/2-Wege-Magnetventil 18" verbunden.

In der Bypassleitung 32" kann zusätzlich ein Rückschlagventil (nicht in Fig. 3 gezeigt) angeordnet sein.

Das 3/2-Wege-Magnetventil 18" ist ferner mit einer elektronischen Steuerungseinheit (nicht in Fig. 2 gezeigt) wirkverbunden.

Innerhalb der ersten Verbindungsleitung 24" kann zudem ein Drucksensor (ebenfalls nicht in Fig. 2 gezeigt) vorgesehen sein, der ebenfalls mit der elektronischen Steuerungseinheit wirkverbunden ist.

Die Funktion des dritten Ausführungsbeispiels des Bremssystems 10" mit einem Steuerventil 18" in Form eines 3/2-Wege-Magnetventils 18" lässt sich folgendermaßen beschreiben:
Sobald an der elektronischen Parkbremseinrichtung 12" der Betriebsdruck anliegt, strömt Druckluft zunächst durch den ersten Abschnitt der ersten Verbindungsleitung 24" zum Eingangsanschluss 16a" des Relaisventils 16".

Sobald weiter an dem pneumatischen Modul 14" der Betriebsdruck anliegt, welcher niedriger ist als der Betriebsdruck der Parkbremseinrichtung, strömt Druckluft zunächst durch den ersten Abschnitt der zweiten Verbindungsleitung 26" zum zweiten Eingangsanschluss 18b" des 3/2-Wege-Magnetventils 18".

Befindet sich das 3/2-Wege-Magnetventil 18" in einem ersten Schaltzustand, ist das pneumatische Modul 14" nicht mit dem Select-High-Ventil 20" verbunden.

Da das Relaisventil 16" ebenfalls nicht betätigt bzw. geöffnet ist, kann der Federspeicherbremszylinder 22" nicht belüftet werden, so dass sich das Nutzfahrzeug im Parkzustand befindet.

Bevor nun das Nutzfahrzeug, welches das Bremssystem aufweist, seinen Fahrbetrieb aufnehmen kann, wird das Relaisventil 16" durch den Steuereingangsanschluss 16b" betätigt und in einen geöffneten Schaltzustand überführt.

Druckluft kann nun vom ersten Abschnitt der ersten Verbindungsleitung 24" (nicht in Fig. 2 gezeigt) über das Relaisventil 16" in den zweiten Abschnitt der ersten Verbindungsleitung 24" einströmen, wodurch die Parkbremseinrichtung 12 nun an dem ersten Eingangsanschluss 20a" mit dem Select-High-Ventil 20" verbunden ist.

Zusätzlich liegt im ersten Schaltzustand des 3/2-Wege-Magnetventils 18" über die Bypassleitung 32" der Druck aus der ersten Verbindungsleitung 24" auch in dem Abschnitt der zweiten Verbindungsleitung 26" an, der sich zwischen dem 3/2-Wege-Magnetventil 18" und dem Select-High-Ventil 20" befindet.

Allerdings ist der Druckverlust aufgrund der Durchströmung der Druckluft der Bypassleitung 32 (und evtl. des Rückschlagventils), des 3/2-Wege-Magnetventils 18" sowie des zweiten Abschnitts der zweiten Verbindungsleitung 26" größer als aufgrund der Durchströmung der Druckluft des zweiten Abschnitts der ersten Verbindungsleitung 26".

Folglich liegt am zweiten Eingangsanschluss 20b" des Select-High-Ventils 20" infolge des ersten Schaltzustands des 3/2-Wege-Magnetventils 18" ein niedrigerer Druck verglichen zu dem Druck am ersten Eingangsanschluss 20a" (Betriebsdruck der elektronischen Parkbremseinrichtung 12") an.

Dadurch wird mittels des Select-High-Ventils 22" lediglich die elektronische Parkbremseinrichtung 12" mit der dritten Verbindungsleitung 30" sowie mit dem Federspeicherzylinder 22" verbunden, so dass dieser nun belüftet werden kann.

Infolge der Belüftung ist der Federspeicherbremszylinder 22" bzw. die elektronische Parkbremseinrichtung 12" gelöst und der Fahrbetrieb des Nutzfahrzeugs kann aufgenommen werden.

Kommt es nun infolge eines Lecks oder eines Leitungsbruchs innerhalb der ersten Verbindungsleitung 24" zu einem unerwünschten Druckverlust, fällt der durch die elektronische Parkbremseinrichtung 12" bereitgestellte Betriebsdruck am ersten Eingangsanschluss 20a" des Select-High-Ventils 20" innerhalb kürzester Zeit auf Atmosphärendruck ab.

Der so entstehende Druckabfall wird von dem Drucksensor in der ersten Verbindungsleitung 24" umgehend erfasst, wodurch ein entsprechendes Steuersignal an die elektronische Steuerungseinheit übermittelt wird.

In Antwort auf das übermittelte Steuersignal des Drucksensors wird das 3/2-Wege-Magnetventil 18" elektrisch betätigt und von seinem ersten in seinen zweiten Schaltzustand überführt.

Im zweiten Schaltzustand des 3/2-Wege-Magnetventils 18" ist das pneumatische Modul 14" nun mit dem Select-High-Ventil 20" verbunden.

Da jedoch der zweite Eingangsanschluss 20b" im ersten Schaltzustand bereits über die Bypassleitung 32" zuvor mit dem Betriebsdruck der elektronischen Parkbremseinrichtung 12" beaufschlagt worden ist, muss nun das pneumatische Modul 14" den zweiten Abschnitt der zweiten Verbindungleitung 26" nicht mehr zusätzlich belüften, was Zeit spart.

Das Select-High-Ventil 20" schaltet also in dem Moment um, sobald der Wert des Betriebsdrucks am ersten Eingangsanschluss 20a" unter den Wert des Betriebsdrucks des pneumatischen Moduls 14 am zweiten Eingangsanschluss 20b" fällt.

Um den zweiten Abschnitt der zweiten Verbindungsleitung 26" in Falle eines ungewünschten Druckverlusts in der ersten Verbindungsleitung 24" gegen letztere abzusichern, kann zusätzlich in der Bypassleitung 32" ein Rückschlagventil angeordnet sein.

Der Federspeicherbremszylinder 22" kann nun durch das pneumatische Modul 14" weiter sicher belüftet werden.

Das dritte Ausführungsbeispiel des erfindungsgemäßen Bremssystems 10" ist lediglich beispielhaft anhand eines Federspeicherbremszylinders 22" beschrieben worden.

Selbstverständlich kann das Bremssystem 10" im Sinne der Erfindung auch mehrere Federspeicherbremszylinder 22" sowie mehrere zu deren Funktion relevante pneumatische Bauteile (z.B. Relaisventil 16" oder Select-High-Ventil 20") aufweisen.

### BEZUGSZEICHENLISTE

- 10: Bremssystem
- 12: Parkbremseinrichtung
- 14: hydraulisches oder pneumatisches Modul
- 16: Relaisventil
- 16a: Eingangsanschluss
- 16b: Steuereingangsanschluss
- 16c: Ausgangsanschluss
- 18: Handsteuerventil
- 18a: erster Eingangsanschluss
- 18b: zweiter Eingangsanschluss
- 18c: erster Ausgangsanschluss
- 18d: zweiter Ausgangsanschluss
- 20: Select-High-Ventil
- 20a: erster Eingangsanschluss des Select-High-Ventils
- 20b: zweiter Eingangsanschluss des Select-High-Ventils
- 20c: Ausgangsanschluss des Select-High-Ventils
- 22: Federspeicherbremszylinder
- 24: erste Verbindungsleitung
- 26: zweite Verbindungsleitung
- 28: Steuerleitung
- 30: dritte Verbindungsleitung
- 32: Bypassleitung

- 10': Bremssystem
- 12': Parkbremseinrichtung
- 14': hydraulisches oder pneumatisches Modul
- 16': Relaisventil
- 16a': Eingangsanschluss
- 16b': Steuereingangsanschluss
- 16c': Ausgangsanschluss
- 18': 3/2-Wege-Magnetventil
- 18a': Entlüftungsausgang
- 18b': Eingangsanschluss
- 18c': Ausgangsanschluss
- 20': Select-High-Ventil
- 20a': erster Eingangsanschluss des Select-High-Ventils
- 20b': zweiter Eingangsanschluss des Select-High-Ventils
- 20c': Ausgangsanschluss des Select-High-Ventils
- 22': Federspeicherbremszylinder
- 24': erste Verbindungsleitung
- 26': zweite Verbindungsleitung
- 30': dritte Verbindungsleitung

- 10": Bremssystem
- 12": Parkbremseinrichtung
- 14": hydraulisches oder pneumatisches Modul
- 16": Relaisventil
- 16a": Eingangsanschluss
- 16b": Steuereingangsanschluss
- 16c": Ausgangsanschluss
- 18": 3/2-Wege-Magnetventil
- 18a": erster Eingangsanschluss
- 18b": zweiter Eingangsanschluss
- 18c": Ausgangsanschluss
- 20": Select-High-Ventil
- 20a": erster Eingangsanschluss des Select-High-Ventils
- 20b": zweiter Eingangsanschluss des Select-High-Ventils
- 20c": Ausgangsanschluss des Select-High-Ventils
- 22": Federspeicherbremszylinder
- 24": erste Verbindungsleitung
- 26": zweite Verbindungsleitung
- 30": dritte Verbindungsleitung
- 32": Bypassleitung

## Patentansprüche

1. Bremssystem (10, 10', 10") für ein Nutzfahrzeug, insbesondere hydraulisches und/oder pneumatisches Bremssystem (10, 10', 10") für ein Nutzfahrzeug, mit wenigstens einer Parkbremseinrichtung (12, 12', 12") und mit wenigstens einem weiteren hydraulischen und/oder pneumatischen Modul (14, 14', 14"), wobei weiter ein Select-High-Ventil (20, 20', 20") und ein Federspeicherbremszylinder (22, 22', 22") vorgesehen sind, wobei die Parkbremseinrichtung (12, 12', 12") mit einer ersten Verbindungsleitung (24, 24', 24") an einem ersten Eingangsanschluss (20a, 20a', 20a") mit dem Select-High-Ventil (20, 20', 20") verbunden ist, wobei das hydraulische und/oder pneumatische Modul (14, 14', 14") mit einer zweiten Verbindungsleitung (26, 26', 26") an einem zweiten Eingangsanschluss (20b, 20b', 20b") mit dem Select-High-Ventil (20, 20', 20") verbindbar ist, wobei der Federspeicherbremszylinder (22, 22', 22") mit einer dritten Verbindungsleitung (30, 30', 30") an einem Ausgangsanschluss (20c, 20c', 20c") mit dem Select-High-Ventil (20, 20', 20") verbunden ist und wobei in der zweiten Verbindungsleitung (26, 26', 26") ein Steuerventil (18, 18', 18") vorgesehen ist, mittels dessen das hydraulische und/oder pneumatische Modul (14, 14', 14") in einem ersten Schaltzustand des Steuerventils (18, 18', 18") nicht mit dem Select-High-Ventil (20, 20', 20") verbunden ist und in einem wenigstens zweiten Schaltzustand des Steuerventils (18, 18', 18") mit dem Select-High-Ventil (20, 20', 20") verbunden ist, wobei das Bremssystem (10, 10', 10") derart beschaffen und eingerichtet ist, dass der Federspeicherbremszylinder (22, 22', 22") über zwei redundante, jeweils mit unterschiedlichen Druckmittelquellen verbundene Verbindungsleitungen und über das Select-High-Ventil (20, 20', 20") belüftbar ist, so dass auch der Abschnitt der zweiten Verbindungsleitung zwischen Steuerventil (18, 18', 18") und Select-High-Ventil (20, 20', 20") während des Fahrbetriebs des Nutzfahrzeugs belüftet werden kann.

2. Bremssystem (10, 10', 10") nach Anspruch 1, **dadurch gekennzeichnet, dass** das Bremssystem (10, 10', 10") ein pneumatisches Bremssystem (10, 10', 10") ist.

3. Bremssystem (10, 10', 10") nach Anspruch 1 oder 2, **dadurch gekennzeichnet, dass** die Parkbremseinrichtung (12, 12', 12") eine elektronische Parkbremseinrichtung (12, 12', 12") ist.

4. Bremssystem (10, 10', 10") nach einem der vorgehenden Ansprüche, **dadurch gekennzeichnet, dass** das Steuerventil (18, 18', 18") ein 3/2-Wege-Ventil (18', 18"), insbesondere ein 3/2-Wege-Magnetventil (18', 18"), ist.

5. Bremssystem (10, 10', 10") nach einem der vorgehenden Ansprüche, **dadurch gekennzeichnet, dass** das Steuerventil (18') einen Entlüftungsausgang (18a') aufweist, über den die zweite Verbindungsleitung (26') im ersten Schaltzustand des Steuerventils (18') wenigstens teilweise entlüftbar ist.

6. Bremssystem (10, 10', 10") nach Anspruch 5, **dadurch gekennzeichnet, dass** wenigstens ein Abschnitt der zweiten Verbindungsleitung (26'), der sich zwischen dem Steuerventil (18') und dem Select-High-Ventil (20') befindet, über den Entlüftungsausgang (18a') des Steuerventils (18') in dessen ersten Schaltzustand entlüftbar ist.

7. Bremssystem (10, 10', 10") nach einem der Ansprüche 1 bis 6, **dadurch gekennzeichnet, dass** eine Bypassleitung (32, 32") vorgesehen ist, die mit ihrem ersten Ende mit der ersten Verbindungsleitung (24, 24") verbunden ist und an ihrem zweiten Ende mit einem weiteren Anschluss des Steuerventils (18, 18") verbunden ist.

8. Bremssystem (10, 10', 10") nach Anspruch 7, **dadurch gekennzeichnet, dass** im ersten Schaltzustand des Steuerventils (18") über die Bypassleitung (32") der Druck aus der ersten Verbindungsleitung (24") auch in dem Abschnitt der zweiten Verbindungsleitung (26") anliegt, der sich zwischen dem Steuerventil (18") und dem Select-High-Ventil (20") befindet.

9. Bremssystem (10, 10', 10") nach einem der vorhergehenden Ansprüche, **dadurch gekennzeichnet, dass** die Parkbremseinrichtung (12, 12', 12") ferner wenigstens ein Relaisventil (16, 16', 16") aufweist, das in der ersten Verbindungsleitung (24, 24', 24") vorgesehen ist.

10. Bremssystem (10, 10', 10") nach einem der Ansprüche 7 bis 9, **dadurch gekennzeichnet, dass** die Bypassleitung (32") stromabwärts des Relaisventils (16") von der ersten Verbindungsleitung (24") abgezweigt ist.

11. Fahrzeug, insbesondere ein Nutzfahrzeug, mit wenigstens einem Bremssystem (10, 10', 10") nach einem der Ansprüche 1 bis 10.

## Claims

1. A brake system (10, 10', 10") for a utility vehicle, in particular a hydraulic and/or pneumatic brake system (10, 10', 10") for a utility vehicle, having at least one parking brake device (12, 12', 12") and at least one further hydraulic and/or pneumatic module (14, 14', 14"), there also being provided a select-high valve (20, 20', 20") and a spring brake cylinder (22, 22', 22"), the parking brake device (12, 12', 12") being connected to the select-high valve (20, 20', 20") at a first input port (20a, 20a', 20a") by a first connecting line (24, 24', 24"), it being possible to connect the hydraulic and/or pneumatic module (14, 14', 14") to the select-high valve (20, 20', 20") at a second input port (20b, 20b', 20b") by a second connecting line (26, 26', 26"), the spring brake cylinder (22, 22', 22") being connected to the select-high valve (20, 20', 20") at an output port (20c, 20c', 20c") by a third connecting line (30, 30', 30"), and there being provided in the second connecting line (26, 26', 26") a control valve (18, 18', 18") by means of which the hydraulic and/or pneumatic module (14, 14', 14") is not connected to the select-high valve (20, 20', 20") in a first switching state of the control valve (18, 18', 18") and is connected to the select-high valve (20, 20', 20") in an at least second switching state of the control valve (18, 18', 18"), the brake system (10, 10', 10") being constituted and configured in such a way that the spring brake cylinder (22, 22', 22") can be vented via two redundant connected lines, each connected to different pressure medium sources, and via the select-high valve (20, 20', 20") such that section of the second connecting line between the control valve (18, 18', 18") and the select-high valve (20, 20', 20") can also be vented while the utility vehicle is driving operation.

2. A brake system (10, 10', 10") according to claim 1, **characterised in that** the brake system (10, 10', 10") is a pneumatic brake system (10, 10', 10").

3. A brake system (10, 10', 10") according to claim 1 or 2, **characterised in that** the parking brake device (12, 12', 12") is an electronic parking brake device (12, 12', 12").

4. A brake system (10, 10', 10") according to any one of the preceding claims, **characterised in that** the control valve (18, 18', 18") is a 3/2-way valve (18', 18"), in particular a 3/2-way solenoid valve (18', 18").

5. A brake system (10, 10', 10") according to any one of the preceding claims, **characterised in that** the control valve (18') has a venting outlet (18a') via which the second connecting line (26') can be at least partially vented in the first switching state of the control valve (18').

6. A brake system (10, 10', 10") according to claim 5, **characterised in that** at least one section of the second connecting line (26') that is located between the control valve (18') and the select-high valve (20'), can be vented via the venting outlet (18a') of the control valve (18') in the first switching state of control valve (18').

7. A brake system (10, 10', 10") according to any one of claims 1 to 6, **characterised in that** a bypass line (32, 32") is provided and that its first end is connected to the first connecting line (24, 24") and its second end is connected to a further port on the control valve (18, 18").

8. A brake system (10, 10', 10") according to claim 7, **characterised in that** in the first switching state of the control valve (18") the pressure from the first connecting line (24") is also present via the bypass line (32") in section of the second connecting line (26") located between the control valve (18") and the select-high valve (20").

9. A brake system (10, 10', 10") according to any one of the preceding claims, **characterised in that** the parking brake device (12, 12', 12") also has at least one relay valve (16, 16', 16"), which is provided in the first connecting line (24, 24', 24").

10. A brake system (10, 10', 10") according to one of claims 7 to 9, **characterised in that** the bypass line (32") branches off the first connecting line (24") downstream of the relay valve (16").

11. A vehicle, in particular a utility vehicle, having at least one brake system (10, 10', 10") according to any one of claims 1 to 10.

## Revendications

1. Système (10, 10', 10'') de freinage d'un véhicule utilitaire, notamment système (10, 10', 10'') de freinage hydraulique et/ou pneumatique d'un véhicule utilitaire, comprenant au moins un dispositif (12, 12', 12'') de frein de stationnement et comprenant au moins un autre module (14, 14', 14'') hydraulique et/ou pneumatique, dans lequel il est prévu, en outre, une vanne (20, 20', 20") select-high et un cylindre (22, 22', 22'') de frein à ressort accumulateur, le dispositif (12, 12', 12'') de frein de stationnement étant relié à la vanne (20, 20', 20'') select-high en un premier raccord (20a, 20a', 20a'') par un premier conduit (24, 24', 24'') de liaison, le module (14, 14', 14'') hydraulique et/ou pneumatique pouvant être relié à la vanne (20, 20', 20'') select-high en un deuxième raccord (20b, 20b', 20b'') d'entrée, par un deuxième conduit (26, 26', 26'') de liaison, le cylindre (22, 22', 22'') de frein à ressort accumulateur étant relié à la vanne (20, 20', 20") select-high en un raccord (20c, 20c', 20c'') de sortie, par un troisième conduit (30, 30', 30'') de liaison et dans lequel il est prévu, dans le deuxième conduit (26, 26', 26'') de liaison, une vanne (18, 18', 18'') de commande, au moyen de laquelle le module (14, 14', 14'') hydraulique et/ou pneumatique n'est pas, dans un premier état de commutation de la vanne (18, 18', 18'') de commande, relié à la vanne (20, 20', 20'') select-high et, dans au moins un deuxième état de commande de la vanne (18, 18', 18'') de commande, est relié à la vanne (20, 20', 20'') select-high, le système (10, 10', 10'') de freinage étant constitué et conçu de manière à ce que le cylindre (22, 22', 22'') de frein à ressort accumulateur puisse être alimenté en air par deux conduits de liaison redondants, reliés chacun à des sources de fluide sous pression différents et par la vanne (20, 20', 20'') select-high, de manière à ce qu'également le tronçon du deuxième conduit de liaison, entre la vanne (18, 18', 18'') de commande et la vanne (20, 20', 20'') select-high, puisse être alimenté en air pendant le fonctionnement en marche du véhicule utilitaire.

2. Système (10, 10', 10'') de freinage suivant la revendication 1, **caractérisé en ce que** le système (10, 10', 10'') de freinage est un système (10, 10', 10'') de freinage pneumatique.

3. Système (10, 10', 10'') de freinage suivant la revendication 1 ou 2, **caractérisé en ce que** le dispositif (12, 12', 12'') de frein de stationnement est un dispositif (12, 12', 12'') électronique de frein de stationnement.

4. Système (10, 10', 10'') de freinage suivant l'une des revendications précédentes, **caractérisé en ce que** la vanne (18, 18', 18'') de commande est une vanne (18', 18'') à 3/2 voies, notamment une électrovanne (18', 18'') à 3/2 voies.

5. Système (10, 10', 10'') de freinage suivant l'une des revendications précédentes, **caractérisé en ce que** la vanne (18') de commande a une sortie (18a') de purge, par laquelle le deuxième conduit (26') de liaison peut, dans le premier état de commutation de la soupape (18') de commande, être purgé, au moins en partie.

6. Système (10, 10', 10'') de freinage suivant la revendication 5, **caractérisé en ce qu'**au moins un tronçon du deuxième conduit (26') de liaison, qui se trouve entre la vanne (18') de commande et la vanne (20') select-high, peut être purgé par la sortie (18a') de purge de la vanne (18') de commande dans son premier état de commutation.

7. Système (10, 10', 10'') de freinage suivant l'une des revendications 1 à 6, **caractérisé en ce qu'**il est prévu un conduit (32, 32'') de dérivation, qui est relié par sa première extrémité au premier conduit (24, 24'') de liaison et par sa deuxième extrémité à un autre raccord de la vanne (18, 18'') de commande.

8. Système (10, 10', 10'') de freinage suivant la revendication 7, **caractérisé en ce que**, dans le premier état de commutation de la vanne (18'') de commande, par l'intermédiaire du conduit (32'') de dérivation, la pression s'applique du premier conduit (24'') de liaison également au tronçon du deuxième conduit (26'') de liaison, qui se trouve entre la vanne (18'') de commande et la vanne (20'') select-high.

9. Système (10, 10', 10'') de freinage suivant l'une des revendications précédentes, **caractérisé en ce que** le dispositif (12, 12', 12'') de frein de stationnement a, en outre, au moins une vanne (16, 16', 16'') relais, qui est prévue dans le premier conduit (24, 24', 24'') de liaison.

10. Système (10, 10', 10'') de freinage suivant l'une des revendications 7 à 9, **caractérisé en ce que** le conduit (32'') de dérivation bifurque du premier conduit (24'') de liaison en aval de la vanne (16'') relais.

11. Véhicule, notamment véhicule utilitaire, ayant au moins un système (10, 10', 10'') de freinage suivant l'une des revendications 1 à 10.
